# EUROPEAN PATENT SPECIFICATION

(11) **EP 2 099 085 B1**
(45) Date of publication and mention of the grant of the patent: **21.08.2013**
(21) Application number: 09003222.8
(22) Date of filing: 05.03.2009
(51) Int. Cl.: H01M 2/10, H01M 10/48, H01M 10/42

(54) **Battery pack**
Batteriepack
Bloc-batteries

(30) Priority: 07.03.2008 JP 2008058603
(43) Date of publication of application: 09.09.2009
(60) Divisional application: 11008673.3
(73) Proprietor: SANYO Electric Co., Ltd., Moriguchi-shi Osaka 570-8677 (JP)
(72) Inventor: Yamagami, Sadao, Moriguchi-shi Osaka 570-8677 (JP); Oono, Yasuhiro, Moriguchi-shi Osaka 570-8677 (JP); Kinugawa, Terumasa, Moriguchi-shi Osaka 570-8677 (JP)
(74) Representative: Hertz, Oliver

(56) References cited:
- US-A1- 2006 267 545
- US-A1- 2007 087 266
- US-A1- 2008 050 645

## Description

### BACKGROUND OF THE INVENTION

### 1. Field of the Invention

The present invention relates to a battery pack for discharging a large amount of current mainly in power-assisted bicycles and the like.

### 2. Description of the Related Art

A battery pack detects a current that flows in a battery, and controls the charged/discharged state of the battery based on the detected current. Thus, the life of the battery can be long. For example, the current of a battery is detected to limit the maximum current of the battery. In another case, an over-current is detected to cut off the current. In still another case, currents in charging/discharging are integrated, and the remaining capacity of the battery is calculated to prevent the battery from being over-charged and over-discharged. Thus, the battery can be charged/discharged in the state where the battery is protected. A battery pack that achieves this function includes a current detecting resistor to detect the current of a battery. The charging and discharge currents of the battery are detected based on voltages that are generated between the both ends of the current detecting resistor. Japanese Patent Laid-Open Publications Nos. 2003-346917 and 2004-87851 disclose battery packs that include a current detecting resistor fixed on a circuit board. A further battery pack is disclosed in US 2008/0050645 A1.

### SUMMARY OF THE INVENTION

A current detecting resistor generates heat by Joule heat of a current. Joule heat is proportional to the product of the electrical resistance of the current detecting resistor, and, the square of the current. The heat generation of the current detecting resistor by Joule heat can be reduced by reducing the electrical resistance of the current detecting resistor. However, in the case where the electrical resistance is reduced, the voltage generated between the both ends is also reduced. In this case, it is hard to accurately detect the current. The reason is that the ratio of external conditions such as noise is increased that causes an error in detection of the current. For this reason, a certain electrical resistance is required for the current detecting resistor. Accordingly, in a battery pack that is charged/discharged with a large amount of current, since the heat generation by Joule heat of the current detecting resistor is increased, the capacity, i.e., the wattage of the current detecting resistor is increased, and the size of the battery pack is increased. For this reason, it is necessary to increase the size of the circuit board on which the current detecting resistor is fixed. Also, since the temperature of the current detecting resistor rises due to the heat generation, members that are affected by heat cannot be disposed close to the current detecting resistor. For this reason, it is necessary to provide space for heat dissipation around the current detecting resistor. This causes further increase of the circuit board in size. In addition, since members such as plastic that are likely to be affected by heat are disposed away from the current detecting resistor, the current detecting resistor is required to be disposed away from the interior surface of an exterior case, for example.

It is an object of the present invention to solve these problems, that is, to provide a battery pack in that a circuit board can be reduced in size and members that may be affected by heat can be disposed away from the current detecting resistor that generates heat but the exterior shape of the batter pack can be small in size. This object is solved with a battery pack comprising the features of claim 1.

Advantageous embodiments of the inventive battery pack are defined in the dependent claims.

A battery pack includes a battery block 10 that includes a plurality of batteries 1 that are accommodated in a battery accommodating portion 15 of a battery holder 2, a current detecting resistor 40 that is connected to the batteries 1 of the battery block 10 in series to detect the currents of the batteries 1 and is formed of a metal plate, and an exterior case 4 and 74 that accommodates the battery block 10. The battery holder 2 includes a pair of support side walls 12 that are arranged on both sides of the battery accommodating portion 15. The pair of support side walls 12 have electrode windows 19 that open to connect lead plates 5 to the end electrodes of the batteries 1 that are accommodated in the battery accommodating portion 15. The lead plates 5 are connected to the end electrodes of the batteries 1 through the electrode windows 19, and the lead plates 5 are arranged on the exterior sides of the support side walls 12. The support side walls 12 are formed wider than the battery accommodating portion 15 to form protruding portions 16 that protrude externally from the battery accommodating portion 15. The current detecting resistor 40 is arranged on the interior sides of the protruding portions 16 of the pair of support side walls 12.

The aforementioned battery pack has features in that a circuit board can be reduced in size and members that are affected by heat can be disposed away from the current detecting resistor that generates heat but the exterior shape of the battery pack can be small in size. The reason is that this battery pack includes a pair of support side walls that are arranged on both sides of a battery accommodating portion of a battery holder that holds the batteries in place, the support side walls being provided with protruding portions that protrude externally from the battery holder, and a current detecting resistor 40 is arranged on the interior sides of the protruding portions of the pair of support side walls. Since the current detecting resistor is not disposed on a circuit board but is arranged between the protruding portions of the support side walls that are arranged in the battery holder, the current detecting resistor can be disposed away from members such as electronic components of the circuit board that may be affected by heat. Therefore, it is possible to prevent adverse effects caused by heat generation of the current detecting resistor. Also, since space that is defined between support side walls can be effectively used to accommodate the current detecting resistor, it is not necessary to provide specially-designed space that accommodates the current detecting resistor. Therefore, it is not necessary to increase the exterior case in size.

In the aforementioned battery pack, one end of the current detecting resistor can be secured by a stopping screw. In this configuration, the current detecting resistor can be easily coupled to the battery block.

In the aforementioned battery pack, the current detecting resistor can include a parallel plate that is arranged along one of the support side walls, and a horizontal plate that is coupled perpendicularly to the parallel plate. In addition, the entire shape of the horizontal plate and the parallel plate can be formed in an L-shape, and the horizontal plate can be bent so that the center part of the horizontal plate is recessed, and a lead line is routed over the center recessed part. In this configuration, the lead line can straddle the support side walls, and additionally the current detecting resistor can be arranged space between the support walls.

In the aforementioned battery pack, contact plate portions that extend along an inner surface of the exterior case can be arranged on side edges of the protruding portions of the support side walls, and the parallel plate of the current detecting resistor can be arranged on the interior-side surface of the contact plate portion. In this configuration, the contact plate portions can cut off heat that is generated by the current detecting resistor. Therefore, the current detecting resistor will not heat the exterior case.

The above and further objects of the present invention as well as the features thereof will become more apparent from the following detailed description to be made in conjunction with the accompanying drawings.

### BRIEF DESCRIPTION OF THE DRAWINGS

Fig. 1 is a perspective view of a battery pack according to one embodiment of the present invention;
Fig. 2 is an exploded perspective view of the battery pack shown in Fig. 1;
Fig. 3 is a perspective bottom view of a battery block of the battery pack shown in Fig. 2;
Fig. 4 is a perspective sectional view of the battery block shown in Fig. 3;
Fig. 5 is an exploded perspective view of the battery block shown in Fig. 3;
Fig. 6 is a circuit diagram of a battery pack according to an embodiment of the present invention;
Fig. 7 is a cross-sectional view schematically showing the state where lead plates are connected to lead connection surfaces of the batteries that compose the battery block;
Fig. 8 is a cross-sectional view of the battery block taken along a line A-A shown in Fig. 3;
Fig. 9 is an enlarged perspective view of current detecting resistor;
Fig. 10 is a cross-sectional view of the battery block taken along a line B-B shown in Fig. 3;
Fig. 11 is a cross-sectional view of the battery block taken along a line C-C shown in Fig. 3;
Fig. 12 is a perspective view showing a sub board holder;
Fig. 13 is a perspective view of the sub board holder shown in Fig. 12 with being turned upside down;
Fig. 14 is an enlarged perspective view showing a first interlocking recessed portion of the battery holder;
Fig. 15 is an enlarged perspective view showing a second interlocking recessed portion of the battery holder;
Fig. 16 is an exploded perspective view showing a connection structure of a support side wall, an output lead plate, and the lead plate;
Fig. 17 is an exploded perspective view showing a connection structure of a support side wall, an output lead plate, and the lead plate;
Fig. 18 is an exploded perspective view of a battery pack according to another embodiment of the present invention; and
Fig. 19 is a side view showing an example in use of a battery pack according to an embodiment of the present invention.

### DETAILED DESCRIPTION OF THE EMBODIMENT(S)

In addition, as a modified embodiment, a board holder 57 can be formed of plastic with a rectangular box shape that closes upward and opens downward, and can be coupled to a battery holder 2 by an interlocking structure. The sub board holder 57 has interlock pawls 58 that are formed integrally with the sub board holder 57 and protrude from both sides of the sub board holder 57. The sub board holder 57 can be coupled to the battery holder 2 by the interlocking structure through the interlock pawls 58. Also, the sub board holder 57 can have a pair of first interlock pawls 58A that are spaced at a predetermined interval away from each other on one side of the sub board holder 57, and one second interlock pawl 58B that is located in the center on the other side of the sub board holder 57.

Also, the battery holder 2 can have interlock recessed portions 51 that are arranged on the interior sides of support side walls 12 that face the aforementioned interlock pawls 58 of the sub board holder 57. The interlock recessed portions 51 receive the interlock pawls 58 to retain the interlock pawls 58. Also, the battery holder 2 can have first retaining recessed portions 51A that retain the aforementioned first interlock pawls 58A, and a second retaining recessed portion 51 B that retains the aforementioned second interlock pawl 58B.

Also, the battery holder 2 can accommodates a plurality of batteries 1 in a staggered arrangement in a battery accommodating portion 15 and a sub circuit board 56 can be arranged in recessed space part 50 that is formed in a stepped part of the staggered batteries 1. Also, a lead line 71 can straddle a pair of support side walls 12, and guiding recessed portions 70 can be arranged in the protruding portions 16 of the aforementioned support side walls 12 to guide the lead line 71. In this case, the lead line 71 can be routed to pass the guiding recessed portions 70 on the exterior sides of the support side walls 12.

Also, the battery block 10 with the current detecting resistor 40 secured to the battery holder 2 can be covered by a waterproof bag 73, and can be accommodated in the exterior case 74.

Also, the sub circuit board 56 can include a calculation circuit that integrates currents of the batteries 1 to calculate the remaining capacity of the batteries 1.

Also, the sub circuit board can include a display portion that displays the remaining capacity of the batteries that is determined by the calculation circuit.

Also, the sub circuit board can include a circuit that detects deterioration conditions of the batteries and determines the life of the batteries.

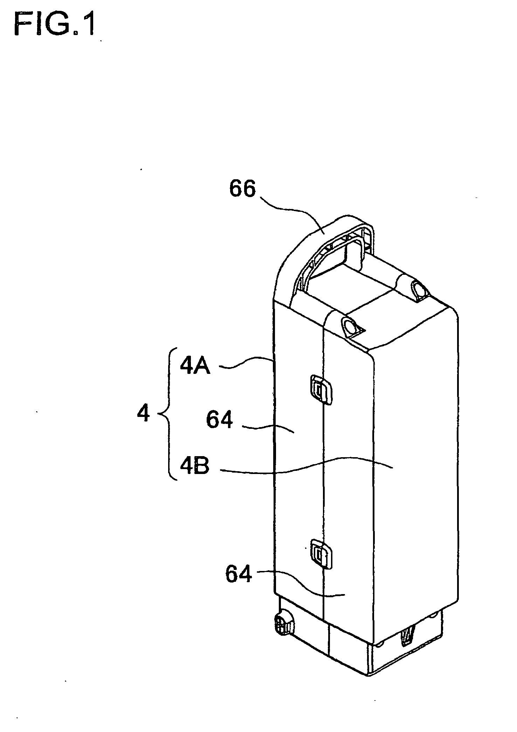

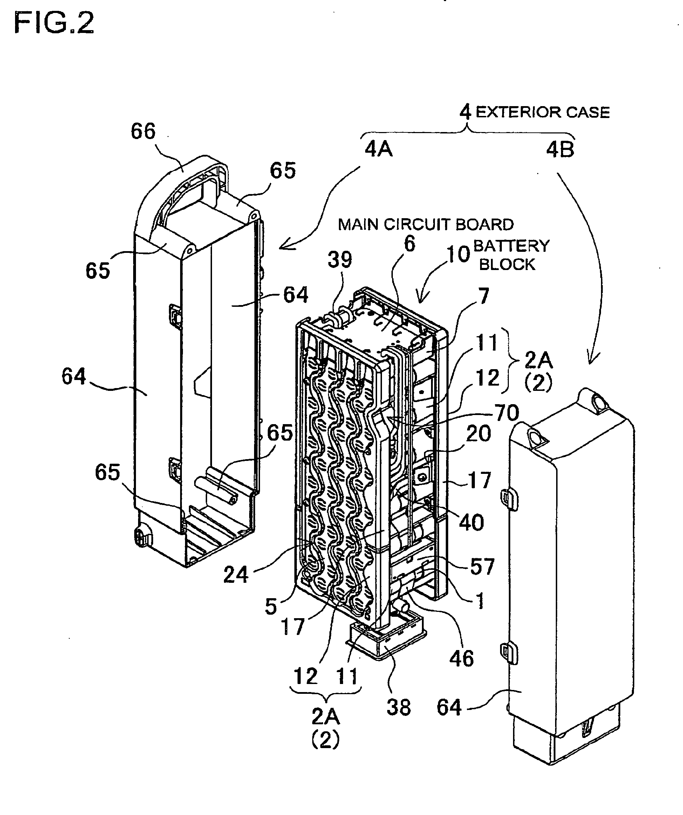

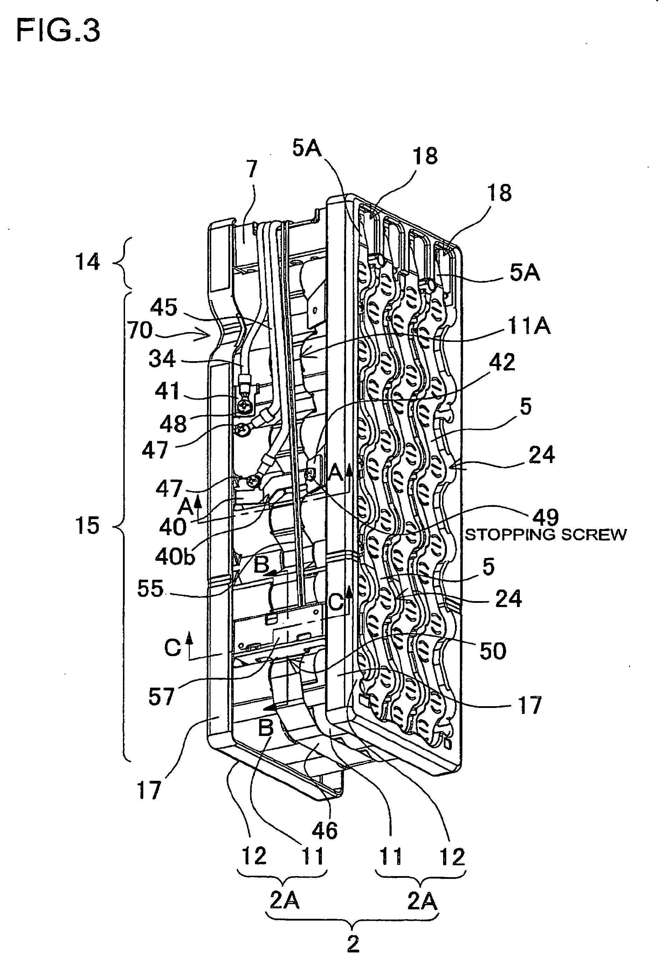

A battery pack shown in Figs. 1 and 2 accommodates batteries 1 that compose a battery block 10 in an exterior case 4. Figs. 3 to 5 show a bottom perspective view, a cross-sectional perspective view, and an exploded perspective view of the battery block 10, respectively. In the illustrated battery pack, a plurality of batteries 1 are arranged in parallel to each other in a stacked-row arrangement to compose the battery block 10. In the battery block 10, batteries 1 are connected to each other in series and in parallel through lead plates 5. The lead plates 5 connect the batteries 1 to a main circuit board 6 that includes a protection circuit that detects the battery voltages of the batteries 1 to prevent the batteries 1 from being over-charged and over-discharged.

### [Battery 1]

The batteries 1 are cylindrical rechargeable batteries. In this embodiment, cylindrical lithium-ion rechargeable batteries are used as the batteries 1.
Lithium-ion rechargeable batteries are suitable for use as a plurality of rechargeable batteries of the battery pack that are connected in parallel so that the connected batteries are connected in series. The reason is that, in the state where a plurality of lithium-ion rechargeable batteries are connected in parallel, the internal resistance of the connected batteries can be small and as a result the amount of the output currents of the connected batteries can be large. In addition, since the charged capacity of lithium-ion rechargeable batteries is large, even in the application where a large amount of current is required, lithium-ion rechargeable batteries will not have a capacity shortage problem. Accordingly, lithium-ion rechargeable batteries can provide sufficient available time in use. However, in the battery pack according to the present invention, the batteries are not specifically limited to lithium-ion rechargeable batteries. Rechargeable batteries such as nickel-hydrogen batteries and nickel-cadmium batteries can be used as long as the rechargeable batteries have a cylindrical shape.

### [Battery Block 10]

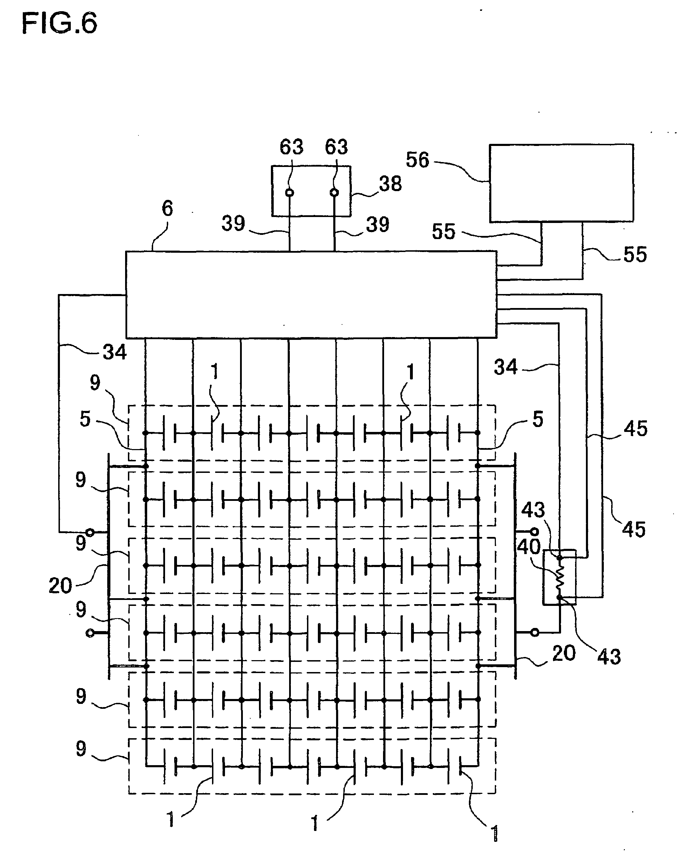

In the battery block 10, a plurality of batteries 1 are arranged in a stacked-row arrangement. In the illustrated battery block 10, the batteries 1 are held in place by a battery holder 2, and are connected to the lead plates 5. Fig. 6 shows a circuit diagram of the illustrated battery pack. In the battery pack in the circuit diagram, six serial connection blocks 9 are connected in parallel by the lead plates 5. Each of the serial connection blocks 9 includes seven batteries 1 that are connected in series. Accordingly, the battery pack includes six parallel connection blocks of seven serially-connected batteries. That is, the battery pack totally includes 42 batteries 1.

In the battery pack shown in the circuit diagram, a current detecting resistor 40 is connected to the batteries 1 in series. In the illustrated battery pack, the current detecting resistor 40 is connected between an output lead plate 20 on the negative side of the batteries 1, and an output terminal 63. A pair of detecting terminals 43 that are provided in the current detecting resistor 40 are connected to a voltage detecting circuit (not shown) that is installed in a main circuit board 6 through lead lines 45. The voltage detecting circuit amplifies a voltage that is generated between the both ends of the current detecting resistor 40 by means of an amplifier. The voltage detecting circuit converts an analog signal of output signal of the amplifier into a digital signal by means of an A/D converter so that the current of the batteries 1 is detected. The voltage that is generated between the both ends of the current detecting resistor 40 corresponds to product of the electrical resistance and of the current of the current detecting resistor 40. Thus, the current can be obtained based on calculation of the digital signal.

The protection circuit that is installed on the main circuit board 6 controls currents that flow in the batteries 1 based on the detected current of the batteries 1, or cuts off the currents when detecting an over-current. The battery pack shown in the circuit diagram of Fig. 6 includes a sub circuit board 56 in addition to the main circuit board 6. The sub circuit board 56 is connected to the main circuit board 6 through lead lines 55, and includes a calculation circuit (not shown) that integrates currents of the batteries 1 that are detected by the main circuit board 6 to calculate the remaining capacity of the batteries 1. In addition, the sub circuit board can include a display portion that displays the remaining capacity of the batteries that is determined by the calculation circuit. Although in the illustrated battery pack, the circuit that determines the remaining capacity of the batteries 1 is installed in the sub circuit board 56, the sub circuit board can include not only the remaining capacity detecting circuit but also a circuit that determines additional function of the battery, such as a circuit that detects the integrated value or deterioration conditions in charging/discharging operation of the battery to determine the life of the batteries.

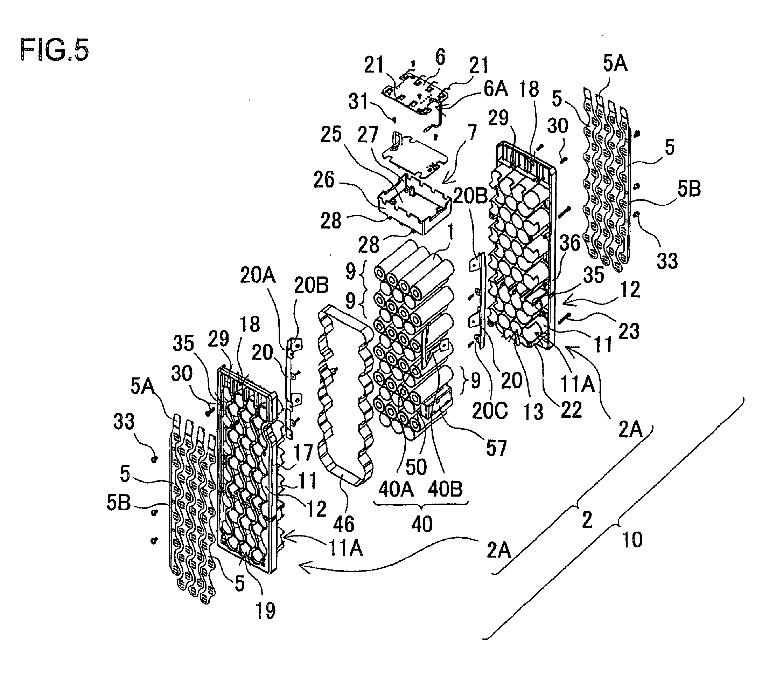

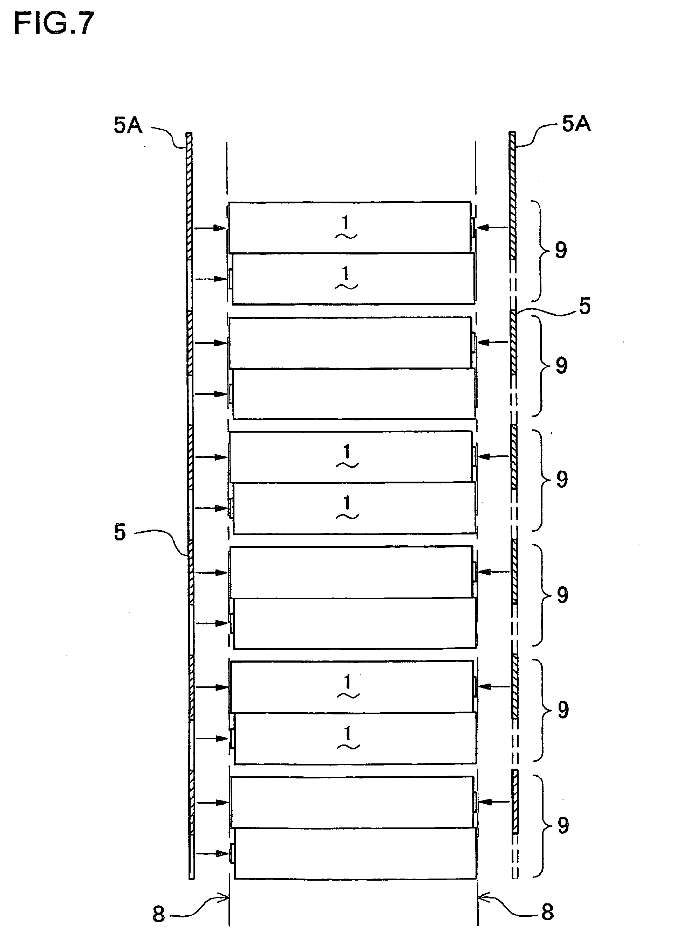

The battery block 10 shown in Figs. 2 to 5 has an entire shape of elongated rectangular prism. The main circuit board 6 is arranged to face the top surface as one of the end surfaces of the battery block 10. A plurality of serial connection blocks 9 are stacked in the vertical direction so that the entire shape of the battery block 10 is a rectangular prism shape. In the illustrated battery block 10, five serial connection blocks 9 are stacked in the vertical direction so that the rectangular prism shape is elongated in the vertical direction corresponding to the up-and-down direction in the Figures. In the serial connection block 9, a plurality of batteries 1 are arranged in two staggered rows. In the illustrated serial connection block 9, four batteries 1 are arranged in the horizontal plane in the upper row, and three batteries 1 are arranged in the horizontal plane in the lower row. Each of the batteries 1 in one of the upper and lower rows is arranged in a valley between adjacent batteries in the other of the upper and lower rows in a staggered arrangement. In this specification, the "staggered or offset arrangement" of batteries refers to the arrangement where each of batteries in one of the upper and lower rows is arranged in a valley between batteries in the other of the upper and lower rows to be stacked in a manner where cylindrical batteries are stacked without tumble. As shown in Fig. 7, in the serial connection block 9, end electrodes of the batteries 1 are connected to lead connection surfaces 8. In the batteries 1 that are arranged in the staggered arrangement, each of batteries 1 in one of the upper and lower rows is arranged in the valley. As shown in Fig. 5, lead plates 5 that are located in outermost locations have a straight edge. In other words, the straight edge is provided with the lead plate 5 that is located in the rightmost location among a plurality of lead plates 5 that are arranged on the right side in Fig. 5, and the straight edge is provided with the lead plate 5 that is located in the leftmost location among a plurality of lead plates 5 that are arranged on the left side in Fig. 5. The serial connection blocks 9 that are arranged in the up-and-down direction can be connected in parallel, and also can be connected to the main circuit board 6. In the case where the battery pack includes the batteries 1 that are arranged in the staggered arrangement, wasted space can be reduced. Therefore, the entire exterior shape of the battery pack can be small. The reason is that space of valleys between the cylindrical batteries can be effectively used to arrange the batteries 1.

In the illustrated serial connection block 9, the batteries 1 are arranged in the staggered arrangement of four batteries in a row and three batteries in a row. Thus, one serial connection block 9 includes seven batteries 1 that are connected in series. However, in the battery pack according to the present invention, the number of the batteries in one serial connection block is not limited to seven. Although not illustrated, the serial connection block may include five batteries of three batteries in a row and two batteries in a row that are connected in series. Also, the serial connection block may include nine batteries of five batteries in a row and four batteries in a row that are connected in series. Although, in the serial connection block 9, the batteries 1 are arranged two staggered rows, the number of the batteries 1 in the upper row is different from the lower row. The number of the batteries 1 in one row is less by one than the other row. The reason that, if the number of the batteries in the upper row is the same as the lower row, vertically elongated lead plates of the battery block cannot provide serial connection of the batteries of the serial connection blocks and parallel connection of the batteries of the serial connection blocks. In the illustrated battery pack, although the number of the batteries 1 in the upper row is greater by one than the lower row of the serial connection block 9, the serial connection block 9 may be turned upside down so that the number of the batteries in the upper row may be less by one than the lower row.

The serial connection blocks 9 that are stacked on the vertical direction are connected in parallel through the lead plates 5. In the illustrated battery pack, six serial connection blocks 9 are connected in parallel. In the battery pack according to the present invention, the number of the serial connection blocks that are connected in parallel is not limited to six. Five or less of serial connection blocks may be arranged in the vertical direction and connected in parallel, or seven or more serial connection blocks may be arranged in the vertical direction and connected in parallel. In the battery block 10, a plurality of serial connection blocks 9 are arranged in the vertical direction and connected in parallel so that the battery block 10 has a vertically elongated rectangular prism shape. In the serial connection blocks 9 that are stacked in a multi-row arrangement, the end electrodes of the batteries 1 are connected to the lead connection surfaces 8 of the battery blocks 10. The reason is that the lead plates 5 are connected to the batteries 1 of all the serial connection blocks 9.

### [Battery Holder 2]

As shown in Figs. 2 to 5, the battery holder 2 includes support side walls 12 that are formed integrally with and coupled to both ends of the holding cylindrical portions 11 that accommodate and hold the batteries 1. In the battery holder 2, the holding cylindrical portions 11 are arranged on the interior sides of the pair of support side walls 12 that face each other to configure a battery accommodating portion 15. The batteries 1 are inserted into the holding cylindrical portions 11. Thus, the batteries 1 are held in place. The battery holder 2 is formed of an insulating material by molding. The insulating material to form the battery holder 2 is plastic. The holding cylindrical portions 11 have insertion holes 13 to which the batteries 1 are inserted. The batteries 1 are inserted into the insertion holes 13 of the holding cylindrical portions 11. Thus, the battery holder 2 holds a plurality of batteries 1 in place. Since the illustrated battery holder 2 holds 42 cylindrical batteries 1 so that 42 cylindrical batteries 1 are coupled to the battery holder 2, the illustrated battery holder 2 includes 42 holding cylindrical portions 11 that are arranged on the support side walls 12. Each of the holding cylindrical portions 11 has the insertion hole 13. The holding cylindrical portions 11 are formed integrally with the support side walls 12 to arrange 42 batteries 1 in the aforementioned arrangement, i.e., in the staggered arrangement.

In the battery holder 2 shown in Fig. 5, the holding cylindrical portion 11 is divided at the center in the axial direction into two parts. The divided parts are formed integrally with and coupled to the pair of support side walls 12. Ends of the divided holding cylindrical portions 11 are formed to be coupled to the interior side of the support side wall 12. In the battery holder 2, the batteries 1 are inserted into the openings on divided ends of the holding cylindrical portions 11 as the insertion hole 13, and the pair of support side walls 12 are coupled to each other. Thus, the batteries 1 are accommodated in the battery holder 2.

As shown in Fig. 5, the holding cylindrical portion 11 has a cylindrical shape that opens to form the insertion hole 13 to surround substantially the entire circumferential surface of the battery 1. However, the holding cylindrical portion 11 does not necessarily open to form the insertion hole to surround the entire circumferential surface of the battery. In the battery holder 2 shown in Fig. 5, some of the holding cylindrical portions 11 have an opening portion 11A. In the illustrated battery holder 2, the opposed opening ends of the divided holding cylindrical portions 11 are cut off to form the opening portions 11A. In the battery holder 2, an abnormal temperature detector 46 is disposed in the opening portions 11A that are formed in the holding cylindrical portions 11. The abnormal temperature detector 46 detects abnormal temperature of the batteries 1 as discussed in detail later. However, a temperature sensor can be disposed in the opening portion that is formed in the holding cylindrical portion to detect the temperature of the battery. This battery pack has a feature in that the battery pack can control charging/discharging operation of the batteries 1 while detecting abnormal temperature of the batteries by means of the abnormal temperature detector 46 or the temperature sensor. However, the holding cylindrical portion does not necessarily have the opening portion.

Although not illustrated, the centrally-divided holding cylindrical portions 11 have an interior surface that is tapered so that the inner diameter of the interior surface gradually decreases from the divided end side toward the support side wall 12 side. The holding cylindrical portions 11 bring their inwardly-bulging parts on the support side wall 12 sides into surface contact with the surfaces of the batteries 1 to hold the batteries 1 in place. This structure that has the divided holding cylindrical portions 11 has features in that the design of metal molds that form plastic can be simple and the plastic can be easily formed.

A pair of support side walls 12 are located at the ends of the holding cylindrical portions 11, and are arranged in parallel to each other. The support side walls 12 are formed in a plate shape that is perpendicularly to the holding cylindrical portions 11. The pair of support side walls 12 have the battery accommodating portions 15 in a middle part with the holding cylindrical portions 11, and an accommodating space portion 14 for the main circuit board 6 in an end part. In the battery holder 2, the pair of support side walls 12 protrude upward in the Figures from ends of holding cylindrical portions 11 so that the accommodation space portion 14 that accommodates the main board holder 7 is provided between the pair of support side walls 12. The width of the accommodation space portion 14 for the main board holder 7 is defined by the length of the holding cylindrical portions 11, i.e., the length of the batteries 1, and the depth of the accommodation space portion 14 is defined by in the protrusion height of the support side walls 12 that protrude upward from the holding cylindrical portions 11. The depth of the accommodation space portion 14, i.e., the protrusion height of the support side walls 12, is a height that can accommodate the main board holder 7 in the accommodation space portion 14.

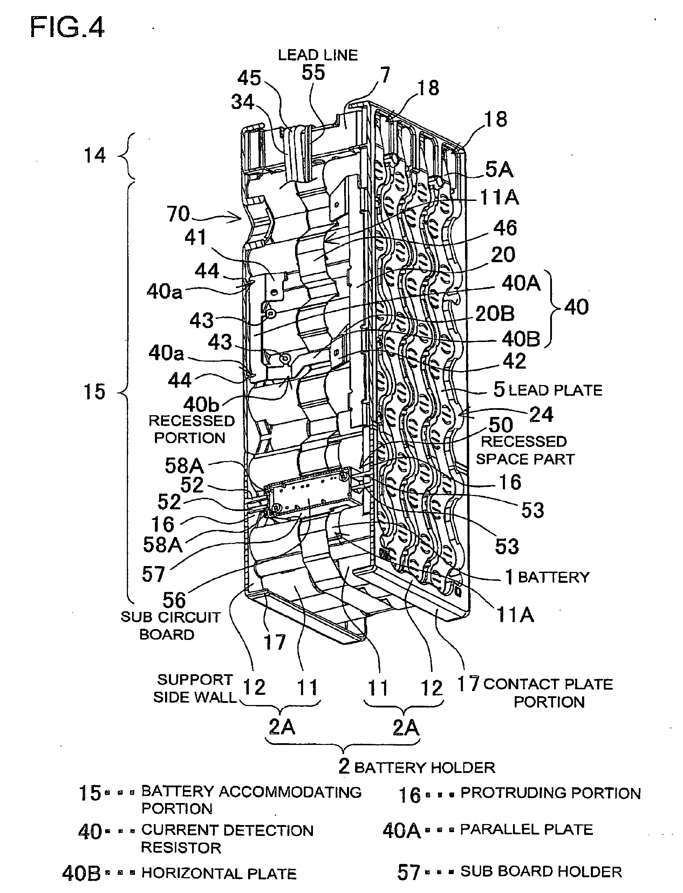

The battery holder 2 is provided with the lead plates 5 that are arranged on the exterior sides of the support side walls 12 that are located in both sides of the battery holder 2. In the support side wall 12, the lead plates 5 are connected by welding to end electrodes that are exposed from the electrode windows 19 that are opening portions of the insertion holes 13 on the exterior sides of the holding cylindrical portions 11. The support side walls 12 shown in Figs. 3 and 4 have positioning recessed portions 24 in which the lead plates 5 are fitted. The lead plates 5 are placed into the positioning recessed portions 24 to be arranged in place. The positioning recessed portions 24 have an outline that is slightly larger than the outline of the lead plate 5. The positioning recessed portions 24 accommodate the lead plates 5 and arrange the lead plates 5 in place.

The support side walls 12 have connection windows 18 that open to connect connection portions 5A of the lead plates 5 to the main circuit board 6. The connection windows 18 open in locations of the connection portions 5A of the lead plates 5 that are arranged in the positioning recessed portions 24 to expose the connection portions 5A to the accommodation space portion 14. The connection portions 5A of the lead plates 5 are arranged in the connection windows 18, and are connected to the main circuit board 6 of the main board holder 7 that is arranged in the accommodation space portion 14.

The support side walls 12 are formed wider than the battery accommodating portion 15 to form protruding portions 16 that protrude externally from the battery accommodating portion 15. Since, in the battery holder 2, the holding cylindrical portions 11 serve as the battery accommodating portion 15, the support side walls 12 are formed in a shape that protrudes externally relative to the holding cylindrical portions 11 to form the protruding portions 16.

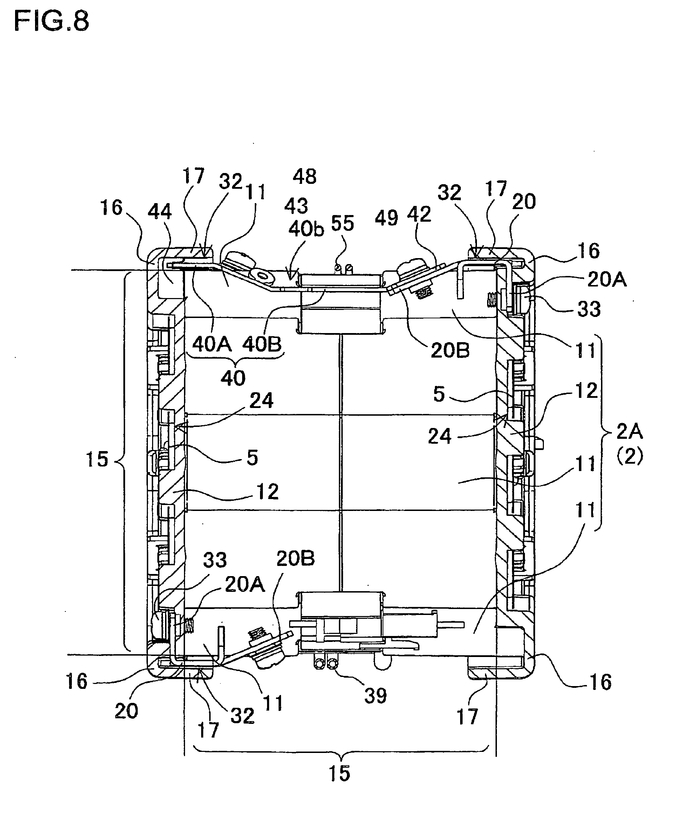

The battery holder 2 shown in Figs. 2 through 5 has contact plate portions 17 that are arranged on the side edges of the protruding portions 16 of the support side walls 12 along an interior surface of the exterior case 4. As shown in Fig. 8, the contact plate portions 17 are disposed away from the surfaces of the holding cylindrical portions 11, and space portions 32 are provided to arrange the current detecting resistor 40 and the output lead plate 20 between the contact plate portions 17 and the holding cylindrical portions 11. Fig. 4 shows a cross-sectional perspective view of the battery block 10 shown in Fig. 3 with the contact plate portion 17 of the battery holder 2 being cut off. In the battery block shown in Fig. 4, fit-in protruding portions 44 are formed integrally with the battery holder to position the current detecting resistor 40 at a predetermined position in the space portion 32 between the contact plate portion 17 and the holding cylindrical portions 11. The fit-in protruding portions 44 protrude inward from the interior surface of the support side wall 12, and are arranged at the positions where the current detecting resistor 40 is secured. The illustrated battery holder 2 includes two protruding portions as a plurality of fit-in protruding portions 44. In other words, the fit-in protruding portions 44 have a plate shape.

### [Current Detecting Resistor 40]

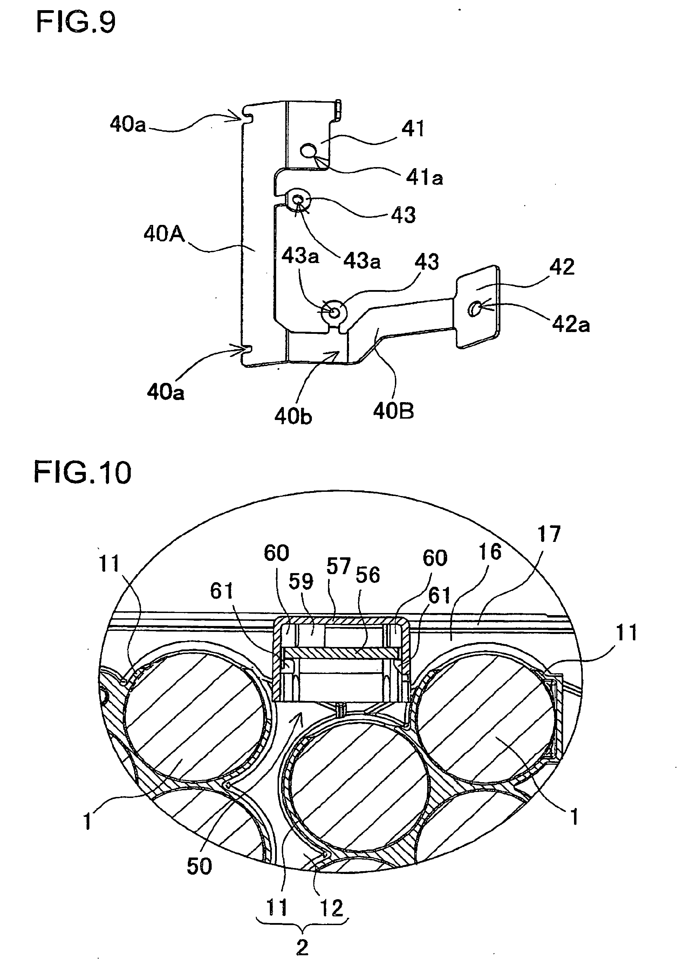

In the battery block 10 shown in Figs. 3, 4 and 8, the current detecting resistor 40 is arranged on the interior sides of the protruding portions 16 of the pair of support side walls 12. As shown in Figs. 4 and 9, the current detecting resistor 40 is formed by cutting out a sheet metal with a predetermined electrical resistance into an L-shape with a predetermined width. The current detecting resistor 40 has a parallel plate 40A that is arranged along one of the support side walls 12, and a horizontal plate 40B that is coupled perpendicularly to the parallel plate 40A. The entire shape of the horizontal plate 40A and the parallel plate 40B is formed in an L-shape.

The end of the parallel plate 40A is bent inward, and the end of the bent part is provided with a connection terminal 41 for an output lead line 34. A through hole 41 a or a threaded hole is provided in the connection terminal 41.
The connection terminal 41 that has the through hole 41 a is connected to the output lead line 34 by a screw 48 and a nut. In the case of the connection terminal that has the threaded hole, the output lead 34 is connected to the connection terminal by screwing a stopping screw into the threaded hole. The lead line 34 is connected to the output terminal 63 (see Fig. 6) that is provided in a connector 38 via the main circuit board 6. The parallel plate 40A has fit-in recessed portions 40a that guide the fit-in protruding portions 44 that are provided in the battery holder 2. The illustrated current detecting resistor 40 has two recessed portions as a plurality of fit-in recessed portions 40a on the outside edge in the both end parts of the parallel plate 40A. The current detecting resistor 40 can guide the fit-in protruding portions 44 of the battery holder 2 to the fit-in recessed portions 40a to be coupled to of the battery holder 2 accurately at the position.

A central part of the horizontal plate 40B is bent into a recessed shape. The lead line 55 can be routed over the recessed portion 40b of the horizontal plate 40B. A fixing terminal 42 is provided at the end of the horizontal plate 40B to be fixed to the output lead plate 20. The fixing terminal 42 has a through hole 42a, and is fixed to the negative-side output lead plate 20 by a stopping screw 49 that is inserted into the through hole 42a. The negative-side output lead plate 20 is coupled by a plurality of stopping screws 33 to the lead plate 5 that is welded to the end electrodes of the batteries 1, and is secured to the battery holder 2 in place. The current detecting resistor 40 is secured by fixing the fixing terminal 42 that is located at one end of the current detecting resistor 40 to the output lead plate 20. Thus, the current detecting resistor 40 is coupled at the predetermined position of the battery holder 2 through the output lead plate 20. In particular, the current detecting resistor 40 shown in Figs. 4 and 8 guides the fit-in protruding portions 44 of the battery holder 2 to the fit-in recessed portions 40a of the parallel plate 40A, and one end of the horizontal plate 40B is secured to the output lead plate 20. Accordingly, the current detecting resistor 40 can be secured accurately at the position of the battery holder 2.

In the current detecting resistor 40, a voltage drop occurs due to a current that flows in the current detecting resistor 40. In other words, when the current flows, a voltage is generated. Accordingly, the current of the batteries 1 is detected based on the generated voltage drop. The current detecting resistor 40 has the detecting terminals 43 in end parts to detect the generated voltage, i.e., the voltage drop. The current detecting resistor 40 shown in Fig. 9 has the detecting terminals 43 in the parallel plate 40A and the horizontal plate 40B. One of the detecting terminals 43 is located in the parallel plate 40A on the side close to the end of the parallel plate 40A. The other of the detecting terminals 43 is located in the horizontal plate 40B on the side close to the parallel plate 40A. The detecting terminals 43 are located on the inner side of the current detecting resistor 40 that is cut out into an L-shape. The detecting terminals 43 are protruding terminals that protrude from the inner-side edges of the current detecting resistor, and through holes 43a are located in the ends of the detecting terminals 43 to be connected to the lead lines 45. The detecting terminals 43 are connected to the main circuit board 6 via the lead lines 45 that are connected to the through holes 43a by screws 47. The main circuit board 6 determines the current of the batteries 1 based on the voltage that is generated in the current detecting resistor 40.

In the battery block 10 shown Figs. 2 to 4, the main circuit board 6 is secured to the battery holder 2 with facing one end surface of the rectangular-prism-shaped battery block 10, and the sub circuit board 56 is located on the interior sides of the protruding portions 16 of the pair of support side walls 12. The sub circuit board 56 is secured through a sub board holder 57 between the support side walls 12 of the battery holder 2. In the illustrated battery block 10, the sub board holder 57 is coupled between the pair of support side walls 12 by a retaining structure.

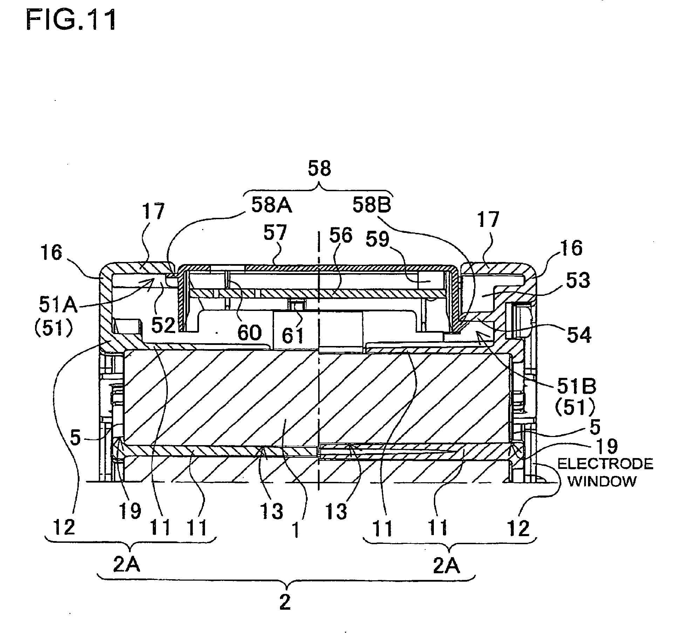

In the illustrated battery block 10, the four batteries 1 and the three batteries 1 are arranged in the staggered arrangement. Accordingly, as shown in Figs. 5 and 10, recessed space parts 50 are provided on the both sides of the row of three batteries 1. In other words, the recessed space parts 50 are defined by stepped parts that are formed by the exterior sides of the stacked batteries 1. In the battery block 10 3 shown in Figs. 3 and 4, as shown in Fig. 11, the side edges of the support side walls 12 are straight, and contact plate portions 17 are arranged along the interior surface of the exterior case 4. In the battery holder 2, the recessed space parts 50 are provided between adjacent holding cylindrical portions 11. The support side walls 12 are located on ends of the recessed space parts 50. Thus, the recessed space parts 50 are parts that are surrounded by the adjacent holding cylindrical portions 11 and the pair of support side walls 12. In the battery pack that includes the sub circuit board 56 in the recessed space part 50, the sub circuit board 56 can be accommodated without increasing the exterior case 4 in size.

### [Sub Board Holder 57]

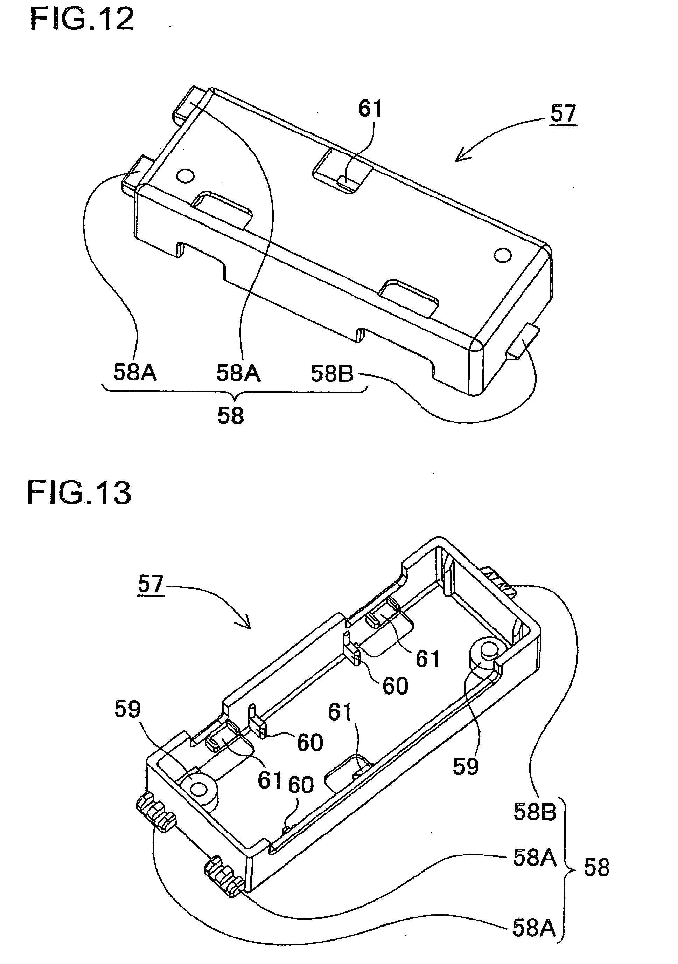

The sub circuit board 56 is accommodated in the sub board holder 57, and is arranged in the recessed space part 50 of the battery block 10. Figs. 12 and 13 show perspective views of the sub board holder 57. Fig. 13 is the perspective view of the sub board holder 57 shown in Fig. 12 with being turned upside down. The board holder 57 shown in the Figures is be formed of plastic with a rectangular box shape that closes upward and opens downward, and is coupled to the recessed space part 50 of the battery holder 2 by the retaining structure. Interlock pawls 58 are integrally formed with the sub board holder 57, and protrude from ends of the sub board holder 57. The illustrated sub board holder 57 has a pair of first interlock pawls 58A on one side of the sub board holder 57, and one second interlock pawl 58B on the opposed side of the sub board holder 57. In the sub board holder 57 shown in Fig. 12, the pair of first interlock pawls 58A are arranged on the both ends at the upper end of an end surface on the left side in the Figures of the sub board holder 57, and are spaced at a predetermined interval away from each other. In the sub board holder 57, one second interlock pawl 58B is arranged in the center at the lower end of the end surface on the right side in the Figures of the sub board holder 57.

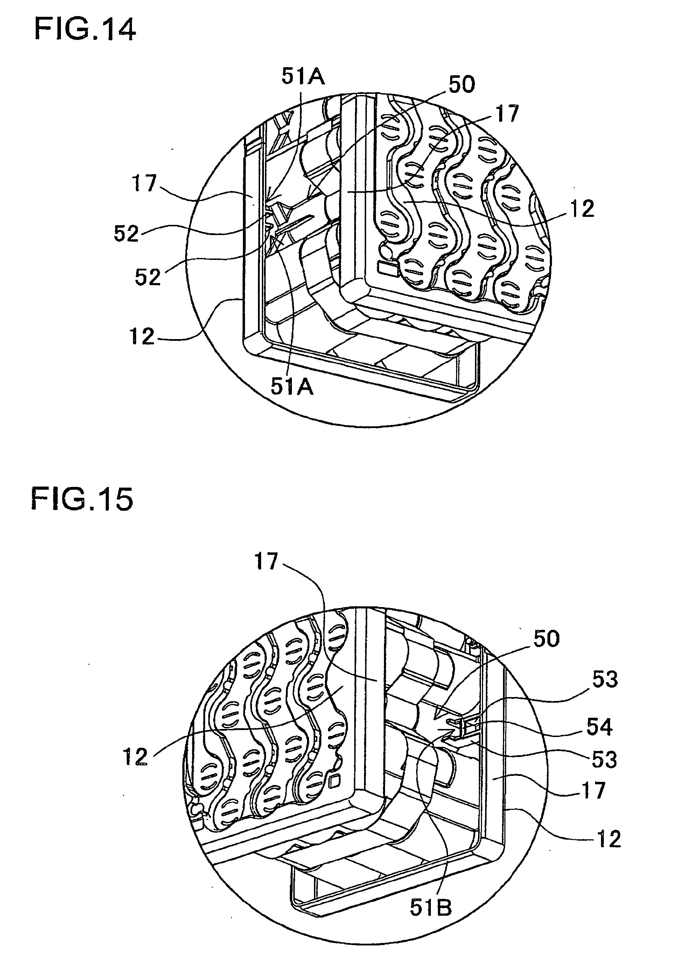

To couple the sub board holder 57 at a predetermined position of the recessed space part 50, the battery holder 2 has interlock recessed portions 51 that are arranged on the interior sides of support side walls 12 that face the interlock pawls 58. The interlock recessed portions 51 receive the interlock pawls 58 to retain the interlock pawls 58. The battery holder 2 shown in Fig. 11 has first retaining recessed portions 51A on the left side of the recessed space part 50, and a second retaining recessed portion 51 B on the right side of the recessed space part 50. The first retaining recessed portions 51A retain the first interlock pawls 58A. The second retaining recessed portion 51 B retains the second interlock pawl 58B. Fig. 14 shows the first retaining recessed portions 51A. Fig. 15 shows the second retaining recessed portion 51 B.

The battery holder 2 shown in Figs. 4, 11 and 14 has two positioning ribs 52. The two positioning ribs 52 are formed integrally with the battery holder 2 perpendicularly to the interior surfaces of the protruding portion 16 and the contact plate portion 17 of the support side wall 12 on the left side in the Figure. The first retaining recessed portions 51A are arranged outside the two positioning ribs 52 on the lower surface of the contact plate portion 17. As shown in the cross-sectional view of Fig. 11, the first interlock pawls 58A are inserted onto the lower surface of the contact plate portion 17, and are retained here. The two positioning rib 52 are spaced away from each other at an interval that allows the pair of first interlock pawls 58A to be fit in between the first retaining recessed portions 51A on the sides of the two positioning rib 52. In this structure, the positioning ribs 52 position the sub board holder 57 in the left-and-right direction, the contact plate portion 17 prevents that the first retaining recessed portions 51A that are fitted in the first interlock pawls 58A are detached upward.

Also, the battery holder 2 shown in Figs. 4, 11 and 15 has two connection ribs 53, and an interlock plate 54. The two connection ribs 53 are formed integrally with the battery holder 2 to be arranged on the interior surface of the protruding portion 16 of the support side wall 12 on the right side in the Figures. The interlock plate 54 is formed integrally with the battery holder 2 to couple the connection ribs 53. The second retaining recessed portion 51 B is arranged between the two connection ribs 53 on the lower surface of the interlock plate 54. The connection ribs 53 are coupled perpendicularly to and arranged on the interior surface of the contact plate portion 17. The interlock plate 54 is arranged in parallel to the contact plate portion 17 at the position where the interlock plate 54 can interlock with the second interlock pawl 58B. The second interlock pawl 58B has a hook-shaped end, and interlocks with the lower surface of the interlock plate 54 of the second retaining recessed portion 51 B.

After the second interlock pawl 58B is inserted into the second retaining recessed portion 51 B, the main part of the sub board holder 57 is fitted in the recessed space part 50, and the first interlock pawls 58A interlock with the lower surface of the interlock plates of the first retaining recessed portions 51A. Thus, the aforementioned sub board holder 57 is coupled at the predetermined position of the battery holder 2.

The sub circuit board 56 is secured inside the sub board holder 57.
The sub board holder 57 is formed integrally with support bases 59, support ribs 60 and holding ribs 61 to position the sub circuit board 56 at the predetermined position. The support bases 59 are arranged to protrude inward from the bottom plate of the sub board holder 57, and support a surface on the bottom plate side of the sub circuit board 56 that is arranged on the support bases 59. The support ribs 60 are arranged to protrude inward in parallel to the bottom plate and perpendicularly to peripheral walls of the sub board holder 57 inward from the bottom plate and the peripheral walls of the sub board holder 57, and support the surface on the bottom plate side of the sub circuit board 56. The support bases 59 and the support ribs 60 support the sub circuit board 56 at the position that is spaced at a predetermined interval away from the bottom plate. The holding ribs 61 are arranged to protrude perpendicularly to the bottom plate of the sub board holder 57 inward from the peripheral wall of the sub board holder 57, and interlock with a surface opposite to the bottom plate of the sub circuit board 56 to hold the sub circuit board 56. In the aforementioned sub board holder 57, one surface of the sub circuit board 56 is supported by the support bases 59 and the support ribs 60, and the other surface of the sub circuit board 56 is held by the holding ribs 61, in other words, the sub circuit board 56 is sandwiched from the both surfaces to be arranged at the predetermined position. In the sub board holder 57, threaded holes into which stopping screws (not shown) are screwed may be provided on the support bases 59 that protrude from the bottom plate so that the sub circuit board 56 is secured by the stopping screws that are screwed into the threaded holes.

In the aforementioned sub board holder 57, the sub circuit board 56 is arranged at the position that is spaced away from the bottom plate of the sub board holder 57. In this sub circuit board 56, electronic components (not shown) that configure the protection circuit and the like can be arranged on a surface that faces the bottom plate of the sub board holder 57. In the structure in that the electronic components are arranged on the surface that faces the bottom plate of the sub board holder 57, the both surfaces of the sub circuit board can be effectively used.

In the aforementioned battery holder 2, as shown in Fig. 5, the holding cylindrical portions 11 are formed integrally with the pair of support side walls 12 to configure holder units 2A. The holder units 2A are coupled to each other. The pair of holder units 2A are coupled to each other by screwing stopping screws 23 into bosses 22 that are formed integrally with the holder unit 2A. The bosses 22 are formed integrally with the holder unit 2A shown in Fig. 5 at the both ends in the lower part and the both ends in the middle part. The bosses 22 have a cylindrical shape. The stopping screws 23 are inserted into the bosses 22. Although not illustrated, the divided holder units may be coupled by a retaining structure, adhesion or the combination of a retaining structure and adhesion.

In the aforementioned battery holder 2, although the halves of the holding cylindrical portions 11 and the support side wall 12 are integrally formed to configure the holder unit 2A, in the battery pack according to the present invention, the battery holder is not limited to the aforementioned structure. The battery holder can have any types of structures that can hold a plurality of batteries in place. For example, the battery holder may have an integral structure without dividing the holding cylindrical portions and the support side walls, or a structure in that the holding cylindrical portions and the support side walls on the both sides are divided. The structure that thus holds a plurality of batteries 1 in place by the battery holder 2 to configure the battery block 10 has a feature in that the battery block 10 can be simply and easily assembled.

### [Lead Plate 5]

The lead plates 5 are connected to the end electrodes of all the batteries 1 that are arranged in the lead connection surfaces 8. The lead plates 5 can be connected to the end electrodes of the batteries by spot welding, laser welding or the like. Highly electrically and thermally conductive materials can be used for the lead plates 5. Examples of suitable materials can be provided by sheet metals such as an iron plate plated with nickel etc., a nickel plate, a copper plate and an aluminum plate.

The lead plates 5 have a shape that is elongated in the vertical direction of the battery block 10. The lead plates 5 serially connects two rows of, seven batteries 1 that compose the serial connection block 9, and connects six serial connection blocks 9 of the batteries 1 in parallel. A plurality of lead plates 5 are arranged on the lead connection surfaces 8 of the battery block 10 in the horizontal direction in a non-contact state. The lead plates 5 are connected to the end electrodes of the batteries 1. The lead plates 5 are connected to the batteries 1 that are arranged in the vertical direction of the battery block 10, in the up-and-down direction in Figure to serially connect the seven batteries 1 that compose the serial connection block 9, and to connect the serial connection blocks 9 that are arranged in the up-and-down direction in parallel. Since, in the illustrated battery pack, the batteries 1 are arranged in the staggered arrangement of four batteries in a row and three batteries in a row in the serial connection block 9, four lead plates 5 are arranged on the lead connection surface 8 to be spaced away from each other in a non-contact state. Specifically, in the illustrated battery pack, the four lead plates 5 are arranged in the positioning recessed portions 24 of the battery holder 2 in place. In the thus-configured battery pack, adjacent lead plates 5 can be arranged to be surely insulated from each other.

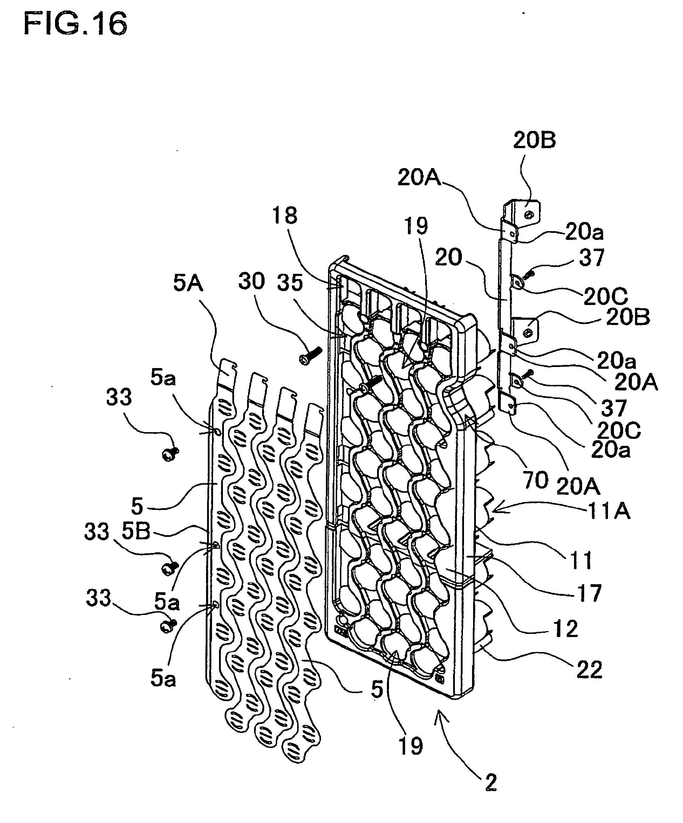

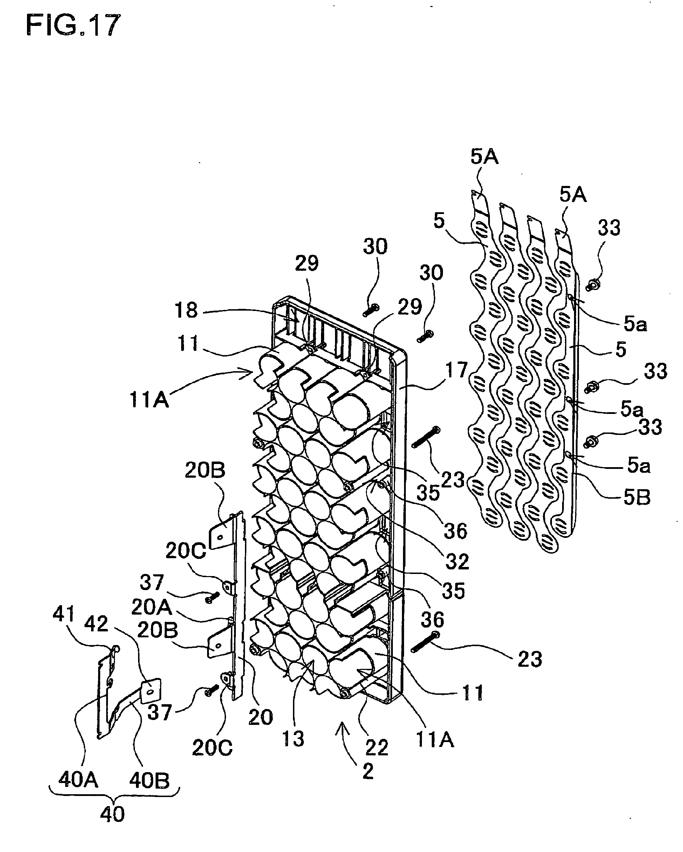

The batteries 1 in the upper and lower rows are arranged in the staggered arrangement, and the batteries 1 in one of the upper and lower rows are deviated in the horizontal direction from the batteries 1 in the other of the upper and lower rows. Accordingly, the lead plates 5 that are connected to the end electrodes of the batteries 1 in the upper and lower rows are formed by cutting out a sheet metal into a zigzag plate with a predetermined width. In the lead plates 5 that are formed in a zigzag shape as shown in Fig. 5, since the lead plate 5 extends along the end surfaces of the batteries 1 in the zigzag shape, even if an external force is applied a load is less likely to concentrate and likely to spread. Accordingly, the lead plate 5 is likely to be deformed rather than to rupture. For this reason, an effect is increased in that the force is absorbed by the deformation. However, as for lead plates 5 that are arranged on one sides of the lead connection surfaces 8, that is, the lead plate 5 on the rightmost among a plurality of lead plates 5 that are arranged on the right side of the batteries 1 in Fig. 5, and the lead plate 5 on the leftmost among a plurality of lead plates 5 that are arranged on the left side of the batteries in Fig. 5, since these lead plates 5 connect the end electrodes as the output side of the serial connection blocks 9 in the up-and-down direction in parallel, they connect the batteries 1 in alternate rows. Accordingly, these lead plates 5 have a zigzag edge on one side and a straight edge on the outside. As shown in Figs. 16 and 17, the straight outside edges of these lead plates 5 are bent to configure bent ribs 5B. These lead plates 5 that have the bent ribs 5B have a feature in that, since their cross-section areas can be large, their electrical resistance can be small. In addition, these lead plates 5 have a feature in that the bent ribs 5B can reinforce parts where the widths of the lead plates 5 are narrow. However, the lead plates does not necessarily have the bent ribs. The reason is that, in the case where the later-discussed output lead plate 20 is connected to the lead plate 5 as the output side, the lead plate 5 can be connected to the output terminal in a low resistance state.

The upper ends of the lead plates 5 are connected to the main circuit board 6. The voltage detecting circuit (not shown) that is installed on the main circuit board 6 detects all the battery voltages. The lead plates 5 have the connection portions 5A on the ends (the upper end in the Figure) that are connected to the main circuit board 6. The lead plates 5 are connected to lead pins 21 that are coupled to the main circuit board 6 by soldering or the like.

### [Output Lead Plate 20]

The output lead plates 20 are connected to the lead plates 5. The output lead plates 20 are arranged on side edges of the support side wall 12, and are connected to the lead plates 5 as the output sides of the battery block 10. The output lead plates 20 are connected to the lead plates 5 as the output sides where a large amount of current flows, and reduces the electrical resistances of the lead plates 5. For this reason, the output lead plates 20 are formed of a sheet metal thicker than the lead plates 5 to reduce the electrical resistances. The output lead plates 20 are connected to the lead plates 5 by the conductive stopping screws 33. The stopping screws 33 are inserted into through holes 5a of the lead plates 5, and are screwed into threaded holes 20a that are formed in the output lead plates 20 so that the output lead plates 20 are connected to the lead plates 5. Accordingly, as shown in Fig. 16, the output lead plate 20 have connection tabs 20A with the threaded holes 20a into which the stopping screws 33a are screwed. The support side wall 12 has the connection windows 35 that open to connect the connection tabs 20A of the output lead plate 20 to the lead plate 5. The illustrated output lead plate 20 is connected at three points to the lead plate 5. Thus, the output lead plate 20 has the connection tabs 20A at three locations. The output lead plate 20 is preferably connected at two or more points to the lead plate 5.

In addition, as shown in Figs. 16 and 17, the output lead plate 20 has output tabs 20B for connecting the lead line 34 that are connected to the main circuit board 6 or the current detecting resistor 40. The illustrated output lead plate 20 has two output tabs 20B. The output tab 20B shown in Fig. 16 is connected to the lead line 34. As shown in Fig. 3, the current detecting resistor 40 is secured and connected to the output tab 20B shown in Fig. 17. The lead line 34 is connected to the main circuit board 6, and is connected via a lead line 39 to the output terminal 63 that is provided in the connector 38.

The output lead plates 20 are secured also to the interior sides of the protruding portions 16 of the battery holder 2. The battery holder 2 shown in Figs. 4, 10, 16 and 17 has the contact plate portions 17 in the protruding portions 16 of the support side walls 12, and the space portions 32 are provided between the contact plate portions 17 and the holding cylindrical portions 11. The output lead plates 20 are arranged in the space portions 32. The output lead plates 20 that are arranged in the space portions 32 are arranged on the interior sides of the contact plate portions 17 of the support side walls 12. The output lead plates 20 have connection parts 20C to be secured to the interior sides of the contact plate portions 17. The support side walls 12 have connecting bosses 36 that protrude inward. Stopping screws 37 pass through the connection parts 20C, and are screwed into the connecting bosses 36 so that the output lead plates 20 are secured to the support side walls 12.

In the aforementioned battery pack, the output lead plates 20 that are arranged on the interior sides of the support side walls 12 are connected to the lead plates 5 that are arranged on the exterior sides of the support side walls 12 and are connected to the end electrodes of the batteries 1. Thus, the output of the batteries 1 is provided via the output lead plates 20. According to this structure, in the battery pack, the electrical resistances of the lead plates 5 that are connected to the end electrodes of the batteries 1 are reduced so that power consumption that is wasted by the lead plates 5 is reduced. Therefore, reduction of output electric power is effectively prevented. However, in the battery pack, the electrical resistances of the lead plates may be reduced instead of providing the output lead plates to reduce the power consumption that is wasted by the lead plates, and to effectively prevent reduction of output electric power.

### [Main Circuit Board 6]

The main circuit board 6 is connected to the batteries 1 via the lead plates 5. The main circuit board 6 includes the protection circuit (not shown) that detects battery voltages, and protects the batteries. The protection circuit that is installed on the main circuit board 6 is a circuit that detects over-charged and over-discharged states of the batteries 1 to control currents, a circuit that detects an over-charged state of the batteries to cut off currents, or the like. To detect the over-charged and over-discharged states of the batteries 1, the protection circuit includes the voltage detecting circuit (not shown) that detects the voltages of the batteries 1. The voltage detecting circuit detects the battery voltages via the lead plates 5, and detects the over-charged and over-discharged states of the batteries 1 based on the detected voltages. If any of the battery voltages becomes lower than a minimum voltage, the protection circuit turns a switching element for cutting off a discharging current OFF to cut off the discharging current. Also, if any of the battery voltages becomes higher than a maximum voltage, the protection circuit turns a switching element for stopping charging operation OFF to stop the charging operation. Thus, the battery pack that includes the protection circuit that detects the battery voltages and controls the charging/discharging operation can be safely used while protecting the batteries 1.

In addition, the main circuit board 6 includes a circuit that detects the abnormal temperature of the batteries 1. As shown in Figs. 4 and 5, the illustrated battery pack includes the abnormal temperature detector 46 that detects the abnormal temperature of the batteries 1 that are accommodated in the battery accommodating portion 15 of the battery holder 2. The illustrated abnormal temperature detector 46 is a belt-shaped member, and is arranged on the outer periphery of the battery accommodating portion 15 of the battery holder 2 in a wrapped state. The abnormal temperature detector 46 is stuck with double-faced tape (not shown) onto the surfaces of the batteries 1 that are exposed from the opening portions 11A that are formed in the holding cylindrical portions 11 of the battery holder 2. The abnormal temperature detector 46 includes two of metal wire lines (e.g., stainless steel wire lines) that are sandwiched between the double-faced tape and the belt-shaped member of nonwoven fabric in a spirally wound state. The surface the metal wire line is coated by insulating resin of fusing plastic such as PP (polypropylene). One end of each of the two metal wire lines is not connected. The other end of each of the two metal wire lines is connected to the main circuit board 6. In the case where the temperature of the batteries 1 falls within a normal temperature range, the resistance between the two metal wire lines of the abnormal temperature detector 46 is detected infinite or a large value by the temperature detecting circuit of the main circuit board 6. If the temperature of the batteries 1 rises to abnormal temperature, the insulating resin of fusing plastic fuses, and the two metal wire lines come in contact with each other. As a result, the resistance between two metal wire lines decreases. The temperature detecting circuit of the main circuit board 6 detects that the resistance between the two metal wire lines decreases, and determines that the temperature of the batteries 1 rises to the abnormal temperature. The temperature detecting circuit of the main circuit board 6 detects the abnormal temperature in the batteries 1 by means of the abnormal temperature detector 46 that has this structure, and discharging operation, charging stop operation and the like are controlled.

The output lead lines 34, and the lead lines 39, 45 and 55 are routed from the main circuit board 6. The output lead lines 34 are connected to the positive and negative output sides of the battery block 10. The positive side of the battery block 10 is connected to the output lead line 34 via the output lead plate 20. The negative side of the battery block 10 is connected to the output lead line 34 via the output lead plate 20 and the current detecting resistor 40. The lead lines 45 are connected to the detecting terminals 43 of the current detecting resistor 40. Ends of the lead lines 55 are connected to the connector 38 that is connected to an external device. The main circuit board may have communication lead lines that are routed from the main circuit board and are connected to a connector. The connector 38 includes the output terminals 63 for the output of the included battery, and connection terminals to be connected to the external device. The connector 38 is arranged in an opening window (not shown) that is provided in the exterior case 4 in the state where the output terminals 63 and the connection terminals are externally exposed. The battery pack is discharged in the state where the charging/discharging output terminals are connected to an electric device, and the batteries are charged in the state where the charging/discharging output terminals are connected to a charger.

### [Main Board Holder 7]

The main board holder 7 accommodates the main circuit board 6 in place. The main board holder 7 shown in Figs. 2 and 5 has a box shape that has peripheral walls 26 on the peripheries of a bottom plate 25, and opens upward. The main board holder 7 accommodates the main circuit board 6 in place inside the peripheral walls 26. As shown in Fig. 5, the main board holder 7 has connection portions 28 that are formed integrally with and protrude downward from the bottom plate 25. The main board holder 7 is secured to the battery holder 2 by screwing stopping screws 30 that pass through the battery holder 2 into the connection portions 28. To screw the stopping screws 30 into the connection portions 28, the battery holder 2 has connecting bosses 29 that are formed integrally with and protrude inward of the support side wall 12. As shown in Fig. 5, the connection portions 28 are arranged in valleys between the upper surfaces of the holding cylindrical portions 11 that are located in the top row. The main board holder 7 is secured to the battery holder 2 in place by screwing the stopping screws 30 that pass through the connecting bosses 29 into the connection portions 28. Although not illustrated, the main board holder may be secured to the battery holder 2 by a retaining structure.

In addition, the main board holder 7 shown in Fig. 5 has support portions 27 that protrude from the bottom plate 25. The main circuit board 6 is secured to the support portions 27 by stopping screws 31 so that the main circuit board 6 is arranged at a position that is spaced away from the bottom plate 25 of the main board holder 7. In this main circuit board 6, electronic components (not shown) that configure the protection circuit and the like can be arranged on a surface that faces the bottom plate 25 of the main board holder 7. In the structure in that the electronic components are arranged on the surface that faces the bottom plate 25 of the main board holder 7, it is possible to effectively prevent that protruding parts of the electronic components protrude outward.

The main circuit board 6 that is accommodated in the main board holder 7 is embedded in insulating resin by potting, for example. In the case where the main circuit board 6 is embedded in the insulating resin by potting, the main circuit board 6 can be waterproofed, and the lead lines that are connected to the main circuit board 6 can be prevented from being detached to eliminate possibility of a short circuit. Since the structure in that the main circuit board 6 is thus embedded in the insulating resin can protect the main circuit board 6 by the waterproofing structure, the structure has a feature in that breakdown of the main circuit board 6 can be reduced very much, and the batteries 1 can be charged/discharged while being protected by the main circuit board 6 for the long term. Opening portions 6A are provided on sides of the main circuit board 6 shown in Fig. 5 to fill space between the main circuit board 6 and the bottom plate 25 of the main board holder 7 with the insulating resin. Resins, such as urethane group resin, silicon group resin and epoxy system resin, can be used for the potting material.

### [Exterior Case 4]

Although not illustrated in detail, the exterior case 4 is formed of plastic such as ABS resin, for example. The exterior case 4 shown in Figs. 1 and 2 is composed of first and second cases 4A and 4B that are formed of plastic. The battery block 10 is accommodated inside the exterior case 4. The first and second cases 4A and 4B have peripheral walls 64 that are formed integrally with the first and second cases 4A and 4B. The illustrated exterior case 4 has bosses 65 that are integrally formed on the interior side and the exterior side of the exterior case 4. The bosses 65 are arranged at the four corners of each of the first and second cases 4A and 4B. Stopping screws (not shown) are inserted into the bosses 35, and the first and second cases 4A and 4B are coupled by the stopping screws. The coupled first and second cases 4A and 4B are closed so that the opening edges of the peripheral walls 64 are in contact with each other without gaps. However, the first and second cases may be coupled to and secured to each other by a coupling structure such as a fit-in type coupling structure, adhesion, welding, or the like. The exterior case 4 can be designed in various shapes according to the applications, purposes and use conditions of the battery pack. In addition, as shown in the Figures, the exterior case 4 has a handle portion 66 that is formed on the upper part integrally with the exterior case 4 to be easily carried.

As discussed above, a plurality of batteries 1 are held in place by the battery holder 2 to configure the battery block 10. In addition, the lead plates 5 that are connected to the end surfaces of each batteries 1 are connected to the main circuit board 6, and the main board holder 7 to which the main circuit board 6 is secured is secured to the battery holder 2 to configure the battery block 10.
The battery block 10 is accommodated in the exterior case 4 to configure the battery pack.

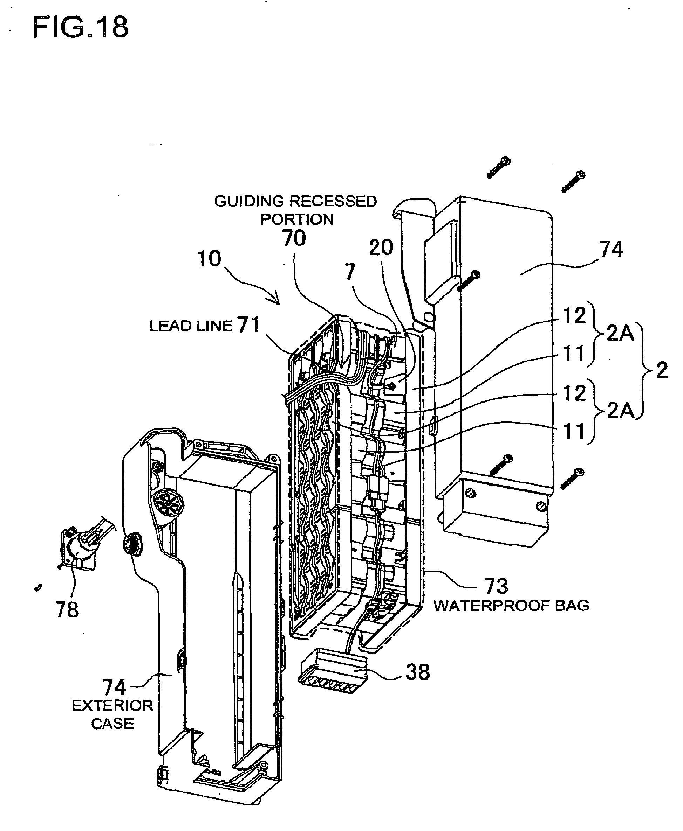

The battery pack shown in Fig. 18 has a sub connector 78 in the exterior case 74. The sub connector 78 is a connector for connecting the battery pack to the charger, for example. In this battery pack, the sub connector 78 is connected to the charger to charge the batteries. In this battery pack, the sub connector 78 is arranged on the exterior side of the pair of support side walls 12. For this reason, it is necessary to route the lead lines 71 that are routed between the pair of support side walls 12 to the exterior side of the support side walls 12.
In the illustrated battery pack, the lead lines 71 are routed to straddle the pair of support side walls 12. Guiding recessed portions 70 are provided in the protruding portion 16 of one of the support side walls 12 (on the left side in the Figure) to guide the lead lines 71. The lead lines 71 are guided through the guiding recessed portions 70, and are routed along the exterior side of the support side wall 12 to be connected to the connector 78 that is arranged on the exterior side of the support side wall 12. In this battery pack, without increasing the exterior case 74 in size, that is, without bulging the routing part of the lead lines 71, the lead lines 71 can be routed from the inner side to the outer side of the support side wall 12 to be connected to the sub connector 78. The reason is that the lead lines 71 are routed through the guiding recessed portions 70 of the support side wall 12. Note that, in this Figure, components same as to those of the foregoing embodiment are attached with the same reference numerals and their description is omitted.

In the battery pack according to the present invention, as shown by a dashed line in Fig. 18, the battery block 10 can be accommodated in a waterproof bag 73, and an opening of the waterproof bag 73 can be water-tightly closed to configure a waterproofing structure. The battery pack 10 with the waterproof structure is accommodated in the exterior case 74. For example, flexible sheets that are formed in a bag shape can be used as the waterproof bag 73. Plastic sheets can be used as the flexible sheets for the waterproof bag 73. Examples of the plastic sheets can be provided by polyimide (PI), polyethylene imide (PEI), PET, and the like. In the battery pack, since the waterproof bag 73 accommodates the battery block that includes the main circuit board 6 that is connected to the batteries 1, in addition to the batteries 1, the main circuit board 6 can be waterproofed and can be accommodated in the exterior case 74. According to this battery pack, the battery block 10 is waterproofed by the waterproof bag 73, and the waterproof bag 73 can be used as a cushion member that absorbs shocks to the exterior case 74. Therefore, it is possible to improve resistance to shock. In particular, in the battery pack according to the present invention, as shown in Fig. 8, since the battery holder 2 includes the contact plate portions 17 that extend along an inner surface of the exterior case are arranged on the side edges of the protruding portions 16 of the support side walls 12, and the parallel plate 40A of the current detecting resistor 40 can be arranged on the interior-side surface of the contact plate portion 17, the contact plate portions 17 can cut off heat that is generated by the current detecting resistor 40. For this reason, since the current detecting resistor 40 will not heat the waterproof bag, it is possible to effectively prevent thermal adverse effects.

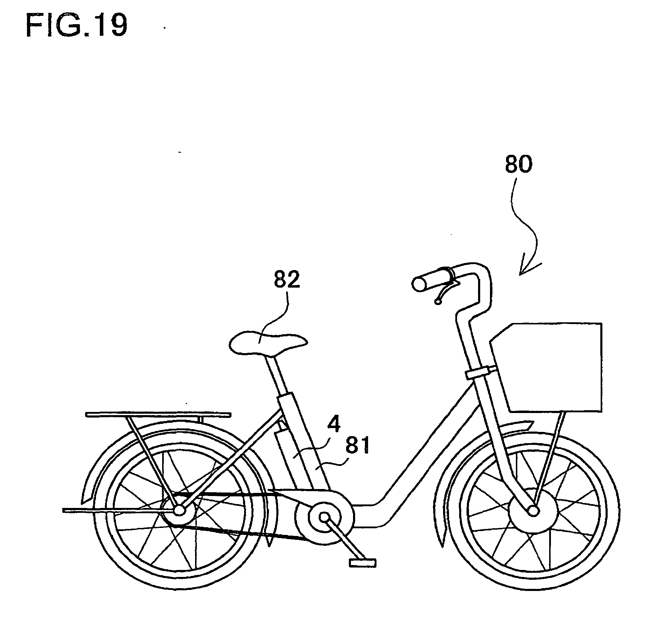

The battery pack according to the present invention can be used as a power supply that drives a motor of a power-assisted bicycle 80, for example, as shown in Fig. 19. The illustrated battery pack is mounted to on the back side of a vertical tube 81 that is located under a saddle 82 of the power-assisted bicycle 80. If a battery pack to be mounted along the vertical tube 81 of the power-assisted bicycle 80 has a large width and protrudes laterally or rearward, such a battery cannot be arranged with maintaining good balance. In particular, such a battery cannot be stably mounted in an upright position along the vertical tube 81. The battery pack according to the present invention has a unique connection structure between the arranged batteries 1 and the lead plates 5 of the battery block 10 that connects many batteries to provide a predetermined output voltage. In addition, the main circuit board 6 is arranged in the upper part of the battery block 10 that has an elongated rectangular prism shape. Accordingly, the entire battery pack will not be wide, and can be compact. Therefore, the battery pack can be used in an ideal state of a battery pack that is mounted in an upright position to the vertical tube 81 as a power supply for the power-assisted bicycle. However, needless to say, the battery pack according to the present invention can be used as a power supply for electric devices other than power-assisted bicycles. In particular, the battery pack according to the present invention can be suitably used in applications that require battery packs to have a compact, elongated rectangular prism shape without increasing its width and additionally to increase the number of the batteries that are connected in parallel so as to increase its output current.

### [Industrial Applicability]

The battery pack according to the present invention is suitably used as a power supply for electric devices that are used outdoors, in particular for power-assisted bicycles or electric motorcycles.
It should be apparent to those with an ordinary skill in the art that while various preferred embodiments of the invention have been shown and described, it is contemplated that the invention is not limited to the particular embodiments disclosed, which are deemed to be merely illustrative of the inventive concepts and should not be interpreted as limiting the scope of the invention, and which are suitable for all modifications and changes falling within the scope of the invention as defined in the appended claims.

## Claims

1. A battery pack comprising:
a battery block (10) that includes a plurality of batteries (1) that are accommodated in a battery accommodating portion (15) of a battery holder (2),
a current detecting resistor (40) that is connected to the batteries (1) of the battery block (10) in series to detect the currents of the batteries (1) and is formed of a metal plate, and
an exterior case (4, 74) that accommodates the said battery block (10), **characterized in that**
said battery holder (2) includes a pair of support side walls (12) that are arranged on both sides of the battery accommodating portion (15), and the pair of support side walls (12) have electrode windows (19) that open to connect lead plates (5) to the end electrodes of the batteries (1) that are accommodated in the battery accommodating portion (15), wherein the lead plates (5) are connected to the end electrodes of the batteries (1) through the electrode windows (19), and the lead plates (5) are arranged on the exterior sides of the support side walls (12), wherein the support side walls (12) are formed wider than the battery accommodating portion (15) to form protruding portions (16) that protrude externally from the battery accommodating portion (15), and the current detecting resistor (40) is arranged on the interior sides of the protruding portions (16) of the pair of support side walls (12).

2. The battery pack according to claim 1, wherein one end of said current detecting resistor (40) is fixed by a stop screw (49).

3. The battery pack according to claim 2, wherein said current detecting resistor (40) includes a fixing terminal (42) that is fixed to an output lead plate (20), and the fixing terminal (42) is fixed to the output lead plate (20) by the stop screw (49).

4. The battery pack according to any of claims 1 to 3, wherein said current detecting resistor (40) includes a parallel plate (40A) that is arranged along one of the support side walls (12), and a horizontal plate (40B) that is coupled perpendicularly to the parallel plate (40A), wherein the entire shape of the horizontal plate (40B) and the parallel plate (40A) is formed in an L-shape, and the horizontal plate (40B) is bent so that the center part of the horizontal plate (40B) is recessed, and a lead line (55) is routed over the center recessed part (40b).

5. The battery pack according to any of claims 1 to 4, wherein said current detecting resistor (40) includes a pair of detecting terminals (43).

6. The battery pack according to claim 4, wherein said current detecting resistor 40 includes a pair of detecting terminals (43), and one of the detecting terminals (43) is located in the parallel plate (40A), and the other detecting terminal (43) is located in the horizontal plate (40B).

7. The battery pack according to claim 4, wherein said current detecting resistor (40) includes a pair of detecting terminals (43), and the detecting terminals (43) are located on the inner side of the current detecting resistor (40) that is cut out into an L-shape.

8. The battery pack according to claim 5, wherein said detecting terminals (43) are protruding terminals that protrude from the inner-side edges of the current detecting resistor, and through holes (43a) are located in the ends of the detecting terminals (43) to be connected to the lead lines (45), wherein the detecting terminals (43) are connected to a main circuit board 6 via the lead lines (45) that are connected to the through holes (43a) by screws (47).

9. The battery pack according to claim 4, wherein contact plate portions (17) that extend along an inner surface of the exterior case (4) are arranged on side edges of the protruding portions (16) of said support side walls (12), and the parallel plate (40A) of the current detecting resistor (40) is arranged on the interior-side surface of the contact plate portion (17).

10. The battery pack according to any of claims 1 to 9, wherein said battery holder (2) is formed integrally with a fit-in protruding portion (44) that positions said current detecting resistor (40) at a predetermined position in a space portion (32) between the contact plate portion (7) and the holding cylinder (11), and said current detecting resistor (40) includes a fit-in recessed portion (40a) that guides said fit-in protruding portion (44), wherein the fit-in protruding portion is guided to the fit-in recessed portion to position said current detecting resistor at the predetermined position.

11. The battery pack according to claim 10, wherein said current detecting resistor (40) includes a parallel plate (40A) that is arranged along one of the support side walls (12), and a horizontal plate (40B) that is coupled perpendicularly to the parallel plate (40A), wherein two recessed portions as a plurality of fit-in recessed portions (40a) are arranged in the outside edges on the both end parts of said parallel plate (40A), and the two fit-in protruding portions (44) of said battery holder (2) are guided into the fit-in recessed portions (40a) so that said current detecting resistor (40) is arranged at the predetermined position.

12. The battery pack according to any of claims 1 to 11, wherein a lead line (71) straddles the pair of support side walls (12), and guiding recessed portions (70) are arranged in the protruding portions (16) of said support side walls (12) to guide the lead line (71), wherein the lead line (71) is routed to pass the guiding recessed portions (70) on the exterior sides of the support side walls (12).

13. The battery pack according to any of claims 1 to 12, wherein the battery block (10) with said current detecting resistor (40) secured to the battery holder (2) is covered by a waterproof bag (73), and is accommodated in the exterior case (74).

## Patentansprüche

1. Ein Batteriepack, umfassend:
einen Batterieblock (10), enthaltend eine Vielzahl von Batterien (1), die in einem Batterieaufnahmeteil (15) eines Batteriehalters (2) aufgenommen sind,
einen Stromerfassungswiderstand (40), der zur Erfassung der Batterieströme mit den Batterien (1) des Batterieblocks (10) in Reihe geschaltet und aus einer Metallplatte gebildet ist, und
ein Außengehäuse (4, 74), in das der Batterieblock (10) aufgenommen ist,
**dadurch gekennzeichnet, dass**
der Batteriehalter (2) ein Paar Stützseitenwände (12) enthält, die an beiden Seiten von dem Batterieaufnahmeteil (15) angeordnet sind, wobei das Paar Stützseitenwände (12) Elektrodenfenster (19) aufweist, die offen sind, um Anschlussplatten (5) mit den Endelektroden der Batterien (1) zu verbinden, die in dem Batterieaufnahmeteil (15) aufgenommen sind,
wobei die Anschlussplatten (5) durch die Elektrodenfenster (19) mit den Endelektroden der Batterien (1) verbunden sind, und wobei die Leitungsplatten (5) an den Außenseiten der Stützseitenwände (12) angeordnet sind,
wobei die Stützseitenwände (12) breiter als das Batterieaufnahmeteil (15) ausgebildet sind, um vorstehende Abschnitte (16) zu bilden, die von dem Batterieaufnahmeteil (15) nach außen vorstehen, und wobei der Stromerfassungswiderstand (40) an den Innenseiten der vorstehenden Abschnitte (16) des Paares von Stützseitenwänden (12) angeordnet ist.

2. Das Batteriepack nach Anspruch 1, wobei ein Ende des Stromerfassungswiderstands (40) durch eine Anschlagschraube (49) befestigt ist.

3. Das Batteriepack nach Anspruch 2, wobei der Stromerfassungswiderstand (40) eine Klemmenbefestigung (42) enthält, die an einer Ausgangsanschlussplatte (20) befestigt ist, wobei die Klemmenbefestigung (42) mit der Anschlagschraube (49) an der Ausgangsanschlussplatte (20) befestigt ist.

4. Das Batteriepack nach einem der Ansprüche 1 bis 3, wobei der Stromerfassungswiderstand (40) eine parallele Platte (40A) enthält, die längs einer der Stützseitenwände (12) angeordnet ist, und eine horizontale Platte (40B), die senkrecht an die parallele Platte (40A) angekoppelt ist, wobei die Gesamtform aus horizontaler Platte (40B) und paralleler Platte (40A) L-förmig ausgebildet ist, und die horizontale Platte (40B) so gebogen ist, dass der mittlere Abschnitt der horizontalen Platte (40B) vertieft ausgebildet ist und eine Anschlussleitung (55) über den mittleren vertieften Abschnitt (40b) geführt ist.

5. Das Batteriepack nach einem der Ansprüche 1 bis 4, wobei der Stromerfassungswiderstand (40) ein Paar Erfassungsanschlüsse (43) enthält.

6. Das Batteriepack nach Anspruch 4, wobei der Stromerfassungswiderstand (40) ein Paar Erfassungsanschlüsse (43) enthält, und einer der Erfassungsanschlüsse (43) in der parallelen Platte (40A) und der andere Erfassungsanschluss (43) in der horizontalen Platte (40B) angeordnet ist.

7. Das Batteriepack nach Anspruch 4, wobei der Stromerfassungswiderstand (40) ein Paar Erfassungsanschlüsse (43) enthält und die Erfassungsanschlüsse (43) an der Innenseite des Stromerfassungswiderstands (40) liegen, der in eine L-Form ausgeschnitten ist.

8. Das Batteriepack nach Anspruch 5, wobei die Erfassungsanschlüsse (43) vorstehende Anschlüsse sind, die von den innenseitigen Kanten des Stromerfassungswiderstands hervorstehen, und wobei Durchgangsbohrungen (43a) an den Enden der Erfassungsanschlüsse (43) vorgehen sind, um mit den Anschlussleitungen (45) verbunden zu werden, wobei die Erfassungsanschlüsse (43) mit einer Hauptschaltkarte (6) über die Anschlussleitungen (45) verbunden sind, die mit den Durchgangsbohrungen (43a) durch Schrauben (47) verbunden sind.

9. Das Batteriepack nach Anspruch 4, wobei Kontaktplattenabschnitte (17), die sich entlang einer Innenseite des Außengehäuses (4) erstrecken, an Seitenkanten der vorstehenden Abschnitte (16) der Stützseitenwände (12) angeordnet sind, und wobei die parallelen Platte (40A) des Stromerfassungswiderstands (40) an der innenseitigen Fläche des Kontaktplattenabschnitts (17) angeordnet ist.

10. Das Batteriepack nach einem der Ansprüche 1 bis 9, wobei der Batteriehalter (2) einstückig mit einem vorstehenden Einpassteil (44) ausgebildet ist, das den Stromerfassungswiderstand (40) an einer vorbestimmten Position in einem Bereich (32) zwischen dem Kontaktplattenabschnitt (7) und dem Haltezylinder (11) positioniert, und wobei der Stromerfassungswiderstand (40) ein vertieftes Einpassteil (40a) umfasst, das das vorstehende Einpassteil (44) führt, wobei das vorstehende Einpassteil (44) zu dem vertieften Einpassteil (40a) geführt ist, um den Stromerkennungswiderstand an der vorbestimmten Position zu positionieren.

11. Das Batteriepack nach Anspruch 10, wobei der Stromerfassungswiderstand (40) eine parallele Platte (40A) enthält, die längsseitig der Stützseitenwände (12) angeordnet ist, und eine horizontale Platte (40B), die senkrecht an der parallelen Platte (40A) angekoppelt ist, wobei zwei vertiefte Abschnitte als eine Vielzahl von vertieften Einpassteilen (40a) an den Außenkanten an den beiden Endabschnitten der parallelen Platte (40A) angeordnet sind, und wobei die beiden vorstehenden Einpassteile (44) des Batteriehalters (2) in den vertieften Einpassteilen (40a) geführt sind, derart, dass der Stromerfassungswiderstand (40) an der vorbestimmten Position angeordnet ist.

12. Das Batteriepack nach einem der Ansprüche 1 bis 11, wobei eine Zuleitung (71) das Paar von Stützseitenwänden (12) umspannt und vertiefte Führungsabschnitte (70) in den vorstehenden Abschnitten (16) der Stützseitenwände (12) vorgesehen sind, um die Zuleitung (71) zu führen, wobei die Zuleitung (71) derart geführt ist, dass sie die vertieften Führungsabschnitte (70) an den Außenseiten der Stützseitenwände (12) passiert.

13. Das Batteriepack nach einem der Ansprüche 1 bis 12, wobei der Batterieblock (10) mit dem Stromerfassungswiderstand (40), der an dem Batteriehalter (2) befestigt ist, mit einer wasserdichten Hülle (73) bedeckt ist und in dem Außengehäuse (74) untergebracht ist.

## Revendications

1. Bloc-batteries comprenant :
un bloc de batteries (10) qui comprend une pluralité de batteries (1) qui sont logées dans une portion de logement de batteries (15) d'un porte-batteries (2),
une résistance de détection de courant (40) qui est reliée aux batteries (1) du bloc de batteries (10) en série pour détecter les courants des batteries (1) et est formée d'une plaque métallique, et
un boîtier extérieur (4, 74) qui loge ledit bloc de batteries (10),
**caractérisé en ce que**
ledit porte-batteries (2) comprend une paire de parois latérales de support (12) qui sont agencées des deux côtés de la portion de logement de batteries (15), et la paire de parois latérales de support (12) comporte des fenêtres d'électrodes (19) qui s'ouvrent pour relier des plaques conductrices (5) aux électrodes d'extrémité des batteries (1) qui sont logées dans la portion de logement de batteries (15), dans lequel les plaques conductrices (5) sont reliées aux électrodes d'extrémité des batteries (1) à travers les fenêtres d'électrodes (19), et les plaques conductrices (5) sont agencées sur les côtés extérieurs des parois latérales de support (12),
dans lequel les parois latérales de support (12) sont formées plus larges que la portion de logement de batteries (15) pour former des portions en saillie (16) qui font saillie à l'extérieur de la portion de logement de batteries (15), et la résistance de détection de courant (40) est agencée sur les côtés intérieurs des portions en saillie (16) de la paire de parois latérales de support (12).

2. Bloc-batteries selon la revendication 1, dans lequel une extrémité de ladite résistance de détection de courant (40) est fixée par une vis de butée (49).

3. Bloc-batteries selon la revendication 2, dans lequel ladite résistance de détection de courant (40) comprend une borne de fixation (42) qui est fixée à une plaque conductrice de sortie (20), et la borne de fixation (42) est fixée à la plaque conductrice de sortie (20) par la vis de butée (49).

4. Bloc-batteries selon l'une quelconque des revendications 1 à 3, dans lequel ladite résistance de détection de courant (40) comprend une plaque parallèle (40A) qui est agencée le long de l'une des parois latérales de support (12), et une plaque horizontale (40B) qui est couplée perpendiculairement à la plaque parallèle (40A), dans lequel la forme complète de la plaque horizontale (40B) et de la plaque parallèle (40A) est en forme de L, et la plaque horizontale (40B) est pliée de sorte que la partie centrale de la plaque horizontale (40B) soit évidée, et une ligne conductrice (55) est acheminée sur la partie évidée centrale (40b).

5. Bloc-batteries selon l'une quelconque des revendications 1 à 4, dans lequel ladite résistance de détection de courant (40) comprend une paire de bornes de détection (43).

6. Bloc-batteries selon la revendication 4, dans lequel ladite résistance de détection de courant (40) comprend une paire de bornes de détection (43), et l'une des bornes de détection (43) est située dans la plaque parallèle (40A), et l'autre borne de détection (43) est située dans la plaque horizontale (40B).

7. Bloc-batteries selon la revendication 4, dans lequel ladite résistance de détection de courant (40) comprend une paire de bornes de détection (43), et les bornes de détection (43) sont situées sur le côté intérieur de la résistance de détection de courant (40) qui est découpée en forme de L.

8. Bloc-batteries selon la revendication 5, dans lequel lesdites bornes de détection (43) sont des bornes en saillie faisant saillie des bords de côté intérieur de la résistance de détection de courant, et des trous traversants (43a) sont situés aux extrémités des bornes de détection (43) pour être reliés aux lignes conductrices (45), dans lequel les bornes de détection (43) sont reliées à une carte de circuit principale (6) par l'intermédiaire des lignes conductrices (45) qui sont reliées aux trous traversants (43a) par des vis (47).

9. Bloc-batteries selon la revendication 4, dans lequel des portions de plaque de contact (17) qui s'étendent le long d'une surface intérieure du boîtier extérieur (4) sont agencées sur des bords latéraux des portions en saillie (16) desdites parois latérales de support (12), et la plaque parallèle (40A) de la résistance de détection de courant (40) est agencée sur la surface de côté intérieur de la portion de plaque de contact (17).

10. Bloc-batteries selon l'une quelconque des revendications 1 à 9, dans lequel ledit porte-batteries (2) est formé d'un seul tenant avec une portion en saillie d'adaptation (44) qui positionne ladite résistance de détection de courant (40) à une position prédéterminée dans une portion d'espace (32) entre la portion de plaque de contact (7) et le cylindre de maintien (11), et ladite résistance de détection de courant (40) comprend une portion évidée d'adaptation (40a) qui guide ladite portion en saillie d'adaptation (44), dans lequel la portion en saillie d'adaptation est guidée vers la portion évidée d'adaptation pour positionner ladite résistance de détection de courant à la position prédéterminée.

11. Bloc-batteries selon la revendication 10, dans lequel ladite résistance de détection de courant (40) comprend une plaque parallèle (40A) qui est agencée le long de l'une des parois latérales de support (12), et une plaque horizontale (40B) qui est couplée perpendiculairement à la plaque parallèle (40A), dans lequel deux portions évidées en tant qu'une pluralité de portions évidées d'adaptation (40a) sont agencées dans les bords extérieurs sur les deux parties d'extrémité de ladite plaque parallèle (40A), et les deux portions en saillie d'adaptation (44) dudit porte-batteries (2) sont guidées dans les portions évidées d'adaptation (40a) de sorte que ladite résistance de détection de courant (40) soit agencée à la position prédéterminée.

12. Bloc-batteries selon l'une quelconque des revendications 1 à 11, dans lequel une ligne conductrice (71) enjambe la paire de parois latérales de support (12), et des portions évidées de guidage (70) sont agencées dans les portions en saillie (16) desdites parois latérales de support (12) pour guider la ligne conductrice (71), dans lequel la ligne conductrice (71) est acheminée pour passer les portions évidées de guidage (70) sur les côtés extérieurs des parois latérales de support (12).

13. Bloc-batteries selon l'une quelconque des revendications 1 à 12, dans lequel le bloc de batteries (10) avec ladite résistance de détection de courant (40) fixée au porte-batteries (2) est recouvert d'un sac étanche à l'eau (73), et est logé dans le boîtier extérieur (74).
